(19) **Europäisches Patentamt European Patent Office Office européen des brevets**

(11) **EP 1 722 585 B1**

(12) **FASCICULE DE BREVET EUROPEEN**

(45) Date de publication et mention
de la délivrance du brevet:
**17.09.2008 Bulletin 2008/38**

(51) Int Cl.:
***H04Q 7/36*** *(2006.01)*

(21) Numéro de dépôt: **06290559.1**

(22) Date de dépôt: **06.04.2006**

(54) **Procédé et système de planification de puissance des porteuses dans un réseau cellulaire de télécommunication**

Verfahren und System zur Trägerleistungsplanung in einem Zellulartelekommunikationsnetz

Method and system for carrier-power planning in a cellular telecomunications network

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.05.2005 FR 0504635**

(43) Date de publication de la demande:
**15.11.2006 Bulletin 2006/46**

(73) Titulaire: **Societé Française du Radiotéléphone 75008 Paris (FR)**

(72) Inventeur: **Vincent, François 92140 Clamart (FR)**

(74) Mandataire: **Debay, Yves Cabinet Debay 126 Elysee 2 F-78170 La Celle Saint Cloud (FR)**

(56) Documents cités:
**EP-A- 1 335 616**

**Description**

DOMAINE TECHNIQUE DE L'INVENTION

La présente invention concerne les réseaux de radiotéléphonie cellulaire, et plus particulièrement, dans le but d'améliorer la couverture radio et le débit binaire des utilisateurs dans un réseau géré par un opérateur, un procédé et un système de planification de puissance des porteuses dans un réseau cellulaire de télécommunication.

Un réseau de radiotéléphonie cellulaire est constitué d'une pluralité de stations radioélectriques terrestres de base dotées d'émetteurs-récepteurs qui assurent la couverture radio de zones définissant des cellules respectives. Dans un système de communication sans fil, chaque station de base communique avec une pluralité de terminaux distants, tels que des téléphones mobiles cellulaires. Les accès multiples par division de fréquence (FDMA : "Frequency-Division multiple Access" en langue anglaise) et les accès multiples par division temporelle (TDMA : "Time-Division multiple Access" en langue anglaise) sont les schémas d'accès multiple traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans interférence.

Les téléphones fonctionnant selon la norme GSM (Global System for Mobile Communications) appartiennent aux systèmes FDMA et TDMA en ce sens que l'émission et la réception s'effectuent à des fréquences différentes et également à des intervalles temporels différents.

A l'opposé de ces systèmes utilisant une division de fréquence ou une division temporelle, les systèmes CDMA (Système à accès multiple par répartition de code ; "Code Division Multiple Access" en langue anglaise) permettent aux utilisateurs multiples de partager une fréquence commune et un canal temporel commun en utilisant une modulation codée. L'utilisation des techniques CDMA d'étalement du spectre permet d'offrir des débits élevés pour les terminaux mobiles. Le standard CDMA le plus récent (par exemple Wide Band CDMA : W-CDMA), dit de troisième génération (3G), est ainsi en phase de déploiement pour de nombreux opérateurs. Parmi les systèmes CDMA on peut citer le système CDMA 2000, le système W-CDMA ("Wide Band CDMA" en langue anglaise ; CDMA-large bande) ou la norme IS-95.

Dans les systèmes CDMA, il peut être distingué les systèmes utilisant une fréquence distincte pour l'émission et la réception (système CDMA-FDD) et ceux qui utilisent une fréquence commune pour l'émission et la réception, mais des domaines temporels distincts pour l'émission et la réception (système CDMA-TDD). Pour les systèmes de type CDMA, une architecture de réseau de type utilisant le protocole IP (Internet Protocol) permet la transmission de données par paquet à haut débit sur un canal DSCH (Downlink Shared Channel), par exemple par un accès radio de type HSDPA (High-Speed Downlink Packet Access). Le mode HSDPA est un codage plus efficace que celui de l'UMTS classique qui permet d'augmenter le débit de données. De même que la technologie HSDPA spécifiée par le 3GPP (projet de partenariat de troisième génération), il existe d'autres technologies d'accès radio utilisant plusieurs canaux, comme par exemple la technologie CDMA 2000 1x EvDO (Evolution Data Only), pour assurer des débits de données particulièrement élevés. A titre indicatif, la norme HSDPA a été spécifiée pour disposer d'une capacité supérieure et de vitesses de transmission plus élevées (jusqu'à 14 Mbps) sur les réseaux W-CDMA existants et doit offrir aux opérateurs comme aux abonnés une qualité de services améliorée et un rapport coûts/performances plus avantageux. Grâce à ce type de technologie, les opérateurs peuvent prendre en charge un nombre beaucoup plus important d'abonnés haut débit sur la même fréquence radio (porteuse), et garantir à ces derniers une utilisation optimale des services multimédias existants ou à venir.

L'invention s'applique avantageusement aux réseaux de communication du type CDMA ou plus largement aux réseaux exploitant une technologie d'accès radio requérant plusieurs canaux DSCH utilisant chacun une fréquence radio appelée porteuse, toutes les cellules utilisant les mêmes fréquences radio avec une puissance d'émission constante, l'accès radio ne nécessitant pas une continuité de couverture sur chaque fréquence. L'invention s'applique donc notamment aux technologies définies et spécifiées par le 3GPP telles que HSDPA, CDMA 2000 1x EvDO et technologies analogues (n'utilisant pas la transmission de voix en commutation de circuits) d'accès à des données fournissant la capacité supplémentaire nécessaire pour répondre aux besoins croissant du marché de la radiotéléphonie en termes d'applications mobiles haut-débit telles que le téléchargement de contenus.

ARRIERE-PLAN TECHNOLOGIQUE DE L'INVENTION

Il est connu par le document W0 2005/011154 une méthode visant à éviter la diminution du débit de transmission de données vers l'utilisateur dans un système 1x EvDO. Toutefois cette méthode concerne uniquement des problèmes de connexion dans une station de base et propose de réaliser une gestion des connexions associées aux utilisateurs pour éviter une surcharge sur certaines de ces connexions.

Dans les systèmes connus de communication par radiotéléphonie cellulaire de type CDMA utilisant plusieurs porteuses, il n'existe pas de méthode pour optimiser la capacité du réseau, notamment par un plafonnement des puissances d'émission cumulées vers les terminaux mobiles des utilisateurs, pour s'adapter de façon opérationnelle au trafic à écouler. Les solutions existantes se limitent à planifier la puissance au sein de chaque cellule, ce qui n'est pas satisfaisant d'un point de vue opérationnel puisqu'il existe des disparités de trafic au sein d'une même cellule.

Un inconvénient majeur des méthodes connues est que certaines zones au sein d'une cellule n'apportent pas un accès radio de qualité, en raison d'un rapport signal à bruit SNR (signal to noise ratio) trop faible. Dans ces zones, le débit binaire de communication de données sera donc très faible (pour une largeur de bande déterminée) ou alors l'usage d'un canal très large y sera nécessaire pour assurer un débit suffisant.

A titre d'illustration, le rapport de puissance entre le signal de la porteuse et le signal interférent C/I peut varier de 0 à plus de 15 dB selon que le client porteur du terminal mobile se trouve en bordure de cellule ou plus près de l'émetteur. Pour améliorer la capacité du réseau, les solutions actuelles consistent à ajouter des nouvelles porteuses sur des fréquences additionnelles, la canalisation des technologies de type CDMA étant fixe (largeur de canal de 1,25 MHz pour le CDMA 2000, 5 MHz pour l'UMTS).

Another example can be found in document EP 1 335 616 (KONINKLIJKE KPN N.V.) 13.08.2003

Il existe donc un besoin de trouver une méthode plus adaptée à la réalité du terrain, permettant de configurer efficacement le réseau de façon à optimiser la capacité globale du réseau et le débit de données pour l'utilisateur dans les zones de cellule les moins bien desservies.

DESCRIPTION GENERALE DE L'INVENTION

La présente invention a donc pour premier objet de supprimer un ou plusieurs des inconvénients de l'art antérieur en définissant un procédé de planification de puissance permettant à un réseau cellulaire de télécommunication du type CDMA de fournir un débit utile optimisé en tout point d'une cellule.

Un autre objet de l'invention est d'optimiser l'utilisation de la puissance disponible dans les amplificateurs de chaque station radioélectrique terrestre de base servant pour l'accès radio de données par des technologies de transmission de données par paquet à haut débit (3GPP : HSDPA, CDMA 2000 1x EvDO, etc.) lorsque cette puissance doit être répartie entre les différentes fréquences (Amplificateurs de Puissance large bande).

A cet effet, l'invention concerne un procédé de planification de puissance des porteuses dans un réseau cellulaire de radiocommunication ayant pour caractéristique de permettre la réutilisation d'une même fréquence sur toutes les cellules du réseau (par exemple accès de type CDMA) doté de stations radioélectriques terrestres de base disposant d'émetteurs pour transmettre des données dans des secteurs d'émission déterminés et assurer une couverture radio de zones définissant des cellules respectives, le procédé étant mis en oeuvre par l'intermédiaire d'un système informatique doté de moyens de mémorisation stockant des données représentatives de zones géographiques découpées en une pluralité de points ou pixels selon le découpage dudit réseau, des données caractéristiques des secteurs et des émetteurs du réseau, des données représentatives de l'atténuation radio en émission/réception pour chaque secteur, des données représentatives de la répartition et du volume du trafic dans le réseau, le procédé étant caractérisé en ce qu'un module de calcul du système informatique réalise, pour chaque secteur d'émission associé à un émetteur ayant une pluralité de porteuses, une étape d'allocation des porteuses à des zones de service, le module de calcul utilisant les données stockées dans les moyens de mémorisation pour distribuer le trafic total du secteur à écouler en N parts de trafic dans N zones de services complémentaires déterminées en fonction de leur atténuation radio et formant géographiquement des couronnes ayant un éloignement croissant par rapport à l'émetteur, le procédé comportant en outre :

- une étape de planification de fréquences incluant l'attribution d'une fréquence déterminée à chaque zone de service, de sorte que les différentes porteuses utilisées dans un secteur sont respectivement associées à une seule zone de service dudit secteur ;
- une étape d'ajustement des puissances de chacune des porteuses, incluant la détermination par le module de calcul, pour chaque zone de service, de rapports signal à bruit en chaque pixel et d'une capacité d'écoulement de trafic par la porteuse associée à cette zone de service, un partage de la puissance de l'émetteur entre les porteuses d'un même secteur étant réalisé de façon déterminée par le module de calcul pour que ladite étape d'ajustement des puissances corresponde à l'obtention d'un maximum de la somme des capacités d'écoulement de trafic des porteuses pour chaque secteur, ledit maximum résultant notamment d'au moins une comparaison par le module de calcul entre plusieurs solutions distinctes de partage de puissance entre les porteuses.

L'invention permet ainsi de planifier la puissance de chaque porteuse séparément en fonction du trafic à couvrir.

Selon une autre particularité, le partage de la puissance de l'émetteur entre les porteuses d'un même secteur est réalisé de façon déterminée par le module de calcul pour que ladite étape d'ajustement des puissances corresponde à l'obtention d'un minimum de dispersion des capacités d'écoulement de trafic apportées individuellement par les différentes porteuses du secteur.

Selon une autre particularité les zones de services sont déterminées dans un secteur en fonction de seuils d'atténuation, une première zone de service regroupant les pixels ayant une atténuation de propagation du signal radio en émission/réception inférieure à un premier seuil déterminé, tandis qu'au moins une seconde zone de service regroupe les pixels ayant une atténuation de propagation du signal radio en émission/réception comprise entre ledit premier seuil et un maximum d'atténuation prédéterminé.

L'invention permet ainsi d'approvisionner par une porteuse spécifique une zone de service éloignée par rapport à l'émetteur. La porteuse associée à cette zone de service éloignée pourra avantageusement être émise avec une plus forte puissance pour assurer un débit de transmission de données comparable au débit fourni à proximité de l'émetteur par une porteuse ayant une moindre puissance d'émission.

Selon une autre particularité, le procédé selon l'invention comprend une étape d'initialisation des paramètres de configuration suivants :

- une liste des secteurs et leurs caractéristiques de puissance disponible ;
- des matrices d'atténuation de propagation pour chaque secteur;
- une matrice de répartition du trafic ;
- un coefficient d'utilisation représentatif d'un volume de trafic ;
- des spécifications de nombre de porteuses par secteur ;
- des règles de correspondance pour associer des porteuses à des amplificateurs d'émetteur ;
- des paramètres d'estimation prévus pour être utilisés dans au moins une fonction de convergence servant à vérifier que ledit ajustement des puissances correspond notamment à l'obtention d'un maximum de la somme des capacités d'écoulement de trafic des porteuses de l'ensemble des secteurs.

Selon une autre particularité, les données représentatives de la répartition et du volume du trafic dans le réseau comprennent des cartes de répartition de trafic réalisées par l'intermédiaire du système informatique, par utilisation des données représentatives de zones géographiques et de données représentatives du trafic dans le réseau des abonnés audit réseau incluant des mesures quantitatives et qualitatives du trafic des abonnés sur le réseau, lesdites mesures correspondant à au moins une tranche horaire déterminée, au moins une carte de répartition du trafic du réseau étant obtenue après une sélection d'au moins une zone géographique par des moyens interactifs entre l'utilisateur et ledit système informatique et une récupération par ledit système de données représentatives du trafic correspondant à ladite zone géographique sélectionnée et à une tranche horaire déterminée pour former, par exploitation de ces données par le système informatique, des données représentatives de cellules de couverture associées à chaque émetteur.

Selon une autre particularité, les données représentatives du trafic dans le réseau de radiocommunication comprennent des données fournies par des moyens compteurs et extraites d'au moins un centre de supervision des équipements par des moyens d'extraction et de mise en table dudit système informatique.

Selon une autre particularité, l'étape d'allocation des porteuses à des zones de service est précédée d'une étape de calcul de la répartition du trafic sur une zone correspondant à la couverture du réseau, l'étape de calcul de la répartition du trafic utilisant les cartes de répartition de trafic pour estimer le trafic en chacun des pixels et prend en compte, par l'intermédiaire des données représentatives de l'atténuation radio en émission/réception pour chaque secteur, une atténuation entre émetteur et récepteur sur le secteur considéré ainsi qu'une probabilité d'assignation sur le secteur en fonction du champ reçu et du niveau de réception des secteurs voisins.

Selon une autre particularité, l'étape de calcul de la répartition du trafic comprend le calcul d'une fonction de distribution cumulative du trafic à écouler en fonction du niveau de l'atténuation de la propagation sur chaque secteur considéré.

Selon une autre particularité, l'étape d'allocation des porteuses à des zones de service comprend, pour au moins un des secteurs, le calcul d'un trafic total à écouler et la détermination d'un nombre N de porteuses suffisant pour que la capacité de l'ensemble des porteuses du secteur permette d'écouler le trafic total.

Selon une autre particularité, l'étape de planification de fréquences est précédée d'une étape de calcul de contraintes de brouillage entre porteuses incluant le calcul d'une matrice de compatibilité entre toutes les porteuses de toutes les cellules.

Selon une autre particularité, l'étape d'ajustement des puissances de chacune des porteuses comprend pour l'ensemble des secteurs une première étape d'estimation de la convergence entre un premier critère correspondant à l'obtention d'un maximum de la somme des capacités d'écoulement de trafic des porteuses des secteurs et un second critère correspondant à l'obtention d'un minimum de dispersion des capacités d'écoulement de trafic apportées individuellement par les différentes porteuses de chaque secteur.

Selon une autre particularité, ladite étape d'ajustement des puissances est suivie d'une étape de calcul de nouvelles contraintes en fréquence résultant de l'ajustement des puissances, une seconde étape d'estimation de la convergence entre lesdits premier et second critères étant ensuite réalisée.

Selon une autre particularité, le procédé selon l'invention comprend une troisième étape d'estimation de la convergence entre lesdits premier et second critères, réalisée juste après une étape de nouveau calcul de zones de service de chaque porteuse, ladite étape de nouveau calcul prenant en compte notamment les modifications résultant de l'ajustement des puissances.

Selon une autre particularité, chaque étape d'estimation de convergence comprend au moins un calcul de ladite fonction de convergence du type correspondant à une différence entre une première valeur représentative du premier critère et une valeur représentative du second critère, puis une comparaison de la variation de cette différence avec un seuil d'acceptation à ne pas dépasser pour que la convergence soit acceptable.

Selon une autre particularité, une réitération du partage de la puissance de l'émetteur entre les porteuses d'un même secteur est déclenchée en cas de dépassement du seuil d'acceptation lors de la première étape d'estimation de la convergence entre lesdits premier et second critères.

Selon une autre particularité, une réitération des étapes de calcul de contraintes de brouillage entre porteuses et de planification de fréquences est déclenchée en cas de dépassement du seuil d'acceptation lors de la seconde étape d'estimation de la convergence entre lesdits premier et second critères.

Selon une autre particularité, une réitération de l'étape d'allocation des porteuses à des zones de service est déclenchée en cas de dépassement du seuil d'acceptation lors de la troisième étape d'estimation de la convergence entre lesdits premier et second critères.

Ainsi, l'invention permet avantageusement d'optimiser le partage de puissance entre porteuses sur un même émetteur selon les deux critères susmentionnés, et cela pour tous les émetteurs du réseau, notamment à l'aide de la boucle itérative sur l'estimation des zones de services faite lors de l'étape d'allocation des porteuses aux zones de service.

Un autre but de l'invention est d'apporter une solution à un ou plusieurs des problèmes rencontrés dans l'art antérieur en définissant un système informatique, spécialement adapté au procédé selon l'invention, pour optimiser l'utilisation de la puissance disponible dans les amplificateurs multi-porteuses (large bande), notamment pour HSDPA et CDMA 1x EvDO.

Ce but est atteint par un système informatique pour la mise en oeuvre du procédé selon l'invention, comportant un module de calcul et des moyens de mémorisation pour stocker des données représentatives de zones géographiques découpées en une pluralité de points ou pixels selon le découpage dudit réseau, des données caractéristiques des secteurs et des émetteurs du réseau, des données représentatives de l'atténuation radio en émission/réception pour chaque secteur, des données représentatives de la répartition et du volume du trafic dans le réseau, caractérisé en ce qu'il comporte des moyens de sélection pour sélectionner chaque secteur d'émission associé à un émetteur, le module de calcul comportant des moyens d'association pour :

- associer des porteuses de l'émetteur à des zones de service, en utilisant les données stockées dans les moyens de mémorisation pour distribuer le trafic total du secteur à écouler en N parts de trafic dans N zones de services complémentaires déterminées en fonction de leur atténuation radio ;
- associer une fréquence déterminée à chaque zone de service, de sorte que les différentes porteuses utilisées dans un secteur sont respectivement associées à une seule zone de service dudit secteur ; ledit système informatique comportant des moyens pour ajuster la puissance d'émission de chacune des porteuses en fonction d'une détermination par le module de calcul d'un partage de la puissance de l'émetteur entre les porteuses d'un même secteur.

Selon une autre particularité, le module de calcul réalise un partage de la puissance de l'émetteur entre les porteuses d'un même secteur en utilisant un programme d'optimisation adapté pour obtenir selon un premier critère un maximum pour la somme des capacités d'écoulement de trafic des porteuses de l'ensemble des secteurs, et selon un deuxième critère, un minimum de dispersion des capacités d'écoulement de trafic apportées individuellement par les différentes porteuses du secteur, des paramètres d'estimation stockés dans les moyens de mémorisation étant utilisés par le module de calcul pour permettre d'optimiser le partage de la puissance de l'émetteur entre les porteuses.

Selon une autre particularité, les moyens d'association sont agencés pour prendre en compte des seuils d'atténuation pour déterminer les zones de services d'un secteur, les moyens d'association regroupant les pixels ayant une atténuation de propagation du signal radio en émission/réception inférieure à un premier seuil déterminé dans une première zone de service, et dans au moins une seconde zone de service, les pixels ayant une atténuation de propagation du signal radio en émission/réception comprise entre ledit premier seuil et un maximum d'atténuation prédéterminé.

Selon une autre particularité, le système comprend dans une mémoire des données représentatives du trafic de données dans le réseau à au moins une tranche horaire déterminée, le système comportant en outre :

- des moyens interactifs entre l'utilisateur et ledit système, reliés aux moyens de sélection pour sélectionner et afficher au moins une desdites zones géographiques ;
- des moyens de superposition à ladite zone géographique sélectionnée de données représentatives du trafic à une tranche horaire déterminée pour former au moins une carte de répartition du trafic, affichée par lesdits moyens interactifs ;

- des moyens d'extraction et de mise en table, à partir de données, fournies par des moyens compteurs et extraites d'au moins un centre de supervision des équipements, de séries de mesures en fonction des zones géographiques et des tranches horaires.

L'invention, avec ses caractéristiques et avantages, ressortira plus clairement à la lecture de la description faite en référence aux dessins annexés donnés à titre d'exemples non limitatifs dans lesquels :

- la figure 1 représente schématiquement le système informatique selon l'invention et une partie du réseau illustrant la répartition de puissance d'un émetteur entre plusieurs zones de services d'un secteur d'émission ;
- la figure 2 montre un exemple de répartition de puissance entre plusieurs zones de services pour une puissance totale de 40 W pour l'émetteur ;
- la figure 3 représente sous forme graphique la répartition du trafic dans un secteur d'émission en fonction de l'atténuation en émission/réception au sein du secteur ;
- la figure 4 représente un logigramme des étapes du procédé dans un mode de réalisation de l'invention ;
- la figure 5 montre un exemple de système informatique selon l'invention et une carte géographique avec répartition du trafic utilisée dans le procédé de répartition de la puissance selon l'invention pour permettre une répartition équitable du trafic entre les porteuses de chaque secteur d'émission.

DESCRIPTION DES MODES DE REALISATION PREFERES DE L'INVENTION

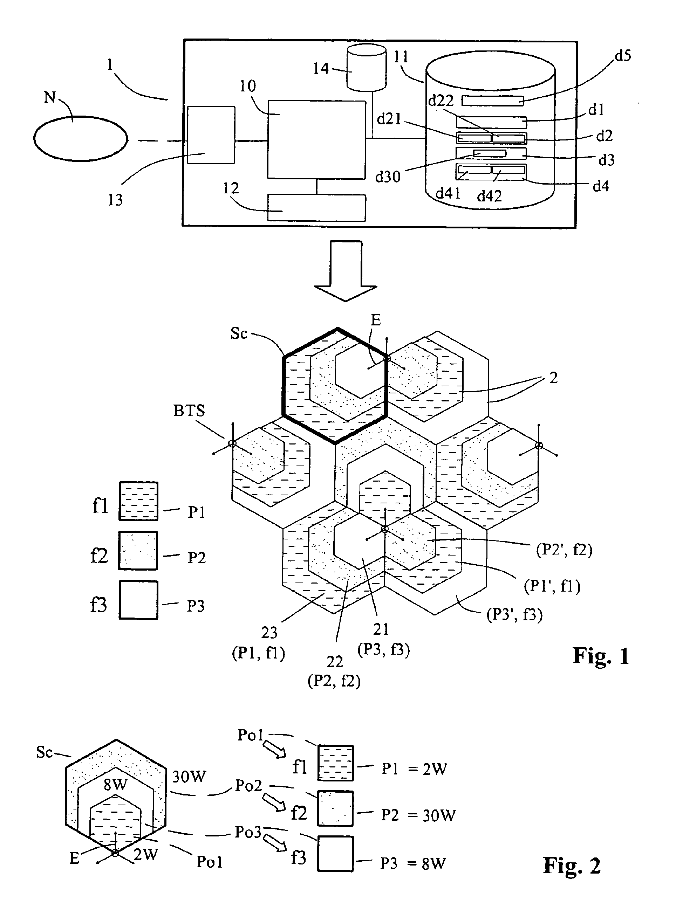

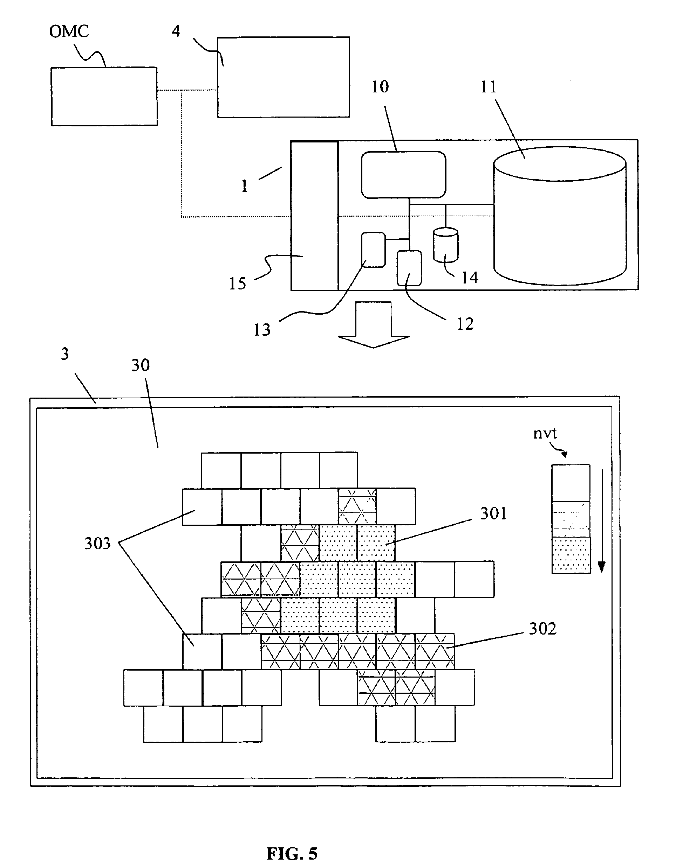

En référence à la figure 1, l'outil de planification de puissance destiné à l'optimisation d'un réseau cellulaire de télécommunication (N) consiste en un système informatique (1) doté notamment d'un module de calcul (10), de moyens de mémorisation (11) et de moyens de sélection (12) pour sélectionner des secteurs d'émission (Sc) respectifs associés à un émetteur (E) d'une station radioélectrique terrestre de base (BTS). Dans un mode de réalisation préféré de l'invention, les moyens de mémorisation (11) permettent de stocker premièrement des données (d1) représentatives de zones géographiques découpées en une pluralité de points ou pixels (301, 302, 303, voir figure 5) selon le découpage dudit réseau, deuxièmement des données (d2) caractéristiques des secteurs (Sc) et des émetteurs (E) du réseau (N), troisièmement des données (d3) représentatives de l'atténuation radio en émission/réception pour chaque secteur (Sc) et quatrièmement des données (d4) représentatives de la répartition et du volume du trafic dans le réseau (N).

De manière connue, lors du déploiement de la couverture d'un réseau (N) de radiocommunication, les cellules sont déployées de façon à assurer une continuité de cette couverture. Selon l'invention, la zone de couverture de chaque émetteur (E) est calculée en utilisant un modèle de prédiction associé à des bases de données (d1) représentatives de zones géographiques et contenant notamment des informations d'altimétrie et de morphologie de terrain appropriées. La probabilité de rattachement à chaque émetteur (E) est calculée en chaque point ou pixel (301, 302, 303) de la zone d'étude, de sorte que l'on peut définir des secteurs géographiques d'émission (Sc) pour chaque émetteur (E). Une planification des fréquences radio utilisées par un émetteur donné permet de minimiser le brouillage (en minimisant le rapport C/I du signal utile sur le signal interféré) et de maximiser le débit binaire en chaque point (301, 302, 303).

Une cartographie du trafic peut être associée aux probabilités en chaque point de connexion à chaque cellule pour définir précisément le trafic attendu à l'intérieur de chaque cellule. Le système informatique (1) sert par exemple dans la phase d'établissement du réseau radio cible dans une zone géographique et permet de créer différentes cartes de trafic. Les informations de trafic obtenues avec le réseau déjà existant sont utilisées pour prévoir un déploiement judicieux de la couverture radio.

En référence à la figure 5, il est montré sur un dispositif interactif (3) de saisie et d'affichage du système informatique (1) une représentation graphique d'une carte (30) de répartition du trafic circuit de radiocommunication (trafic de données uniquement) dans une zone géographique pour laquelle le réseau cible est en cours de définition. La carte (30) représente graphiquement une superposition de données entre d'une part des premières données d'une carte numérique, et d'autre part des données représentatives du trafic sur le circuit de radiocommunication des abonnés au réseau, ces données étant par exemple stockées dans les moyens de mémorisation (11). Le module de calcul (10), de type unité centrale ou analogue, les moyens de mémorisation (11), ainsi que les moyens de saisie par un clavier avec souris ou un autre dispositif et de présentation de données par un écran d'affichage interactif (3), n'ont pas été représentés en détail.

Les données représentatives du trafic des circuits de radiocommunication comprennent des données fournies par des moyens compteurs (4) et extraites d'au moins un centre de supervision des équipements (OMC) par des moyens (15) d'extraction et des moyens de mise en table exploités par le système informatique (1). Ces données extraites peuvent consister en des moyennes de mesures du trafic ou en plusieurs séries de mesures quantitatives et qualitatives du trafic, réparties en différents points de la zone géographique étudiée. Chaque série de mesures correspond par exemple à une tranche horaire différente pour une même localisation. Dans un mode de réalisation de l'invention, les moyens (15) d'extraction et de mise en table permettent de classer les mesures en fonction des cartes géographiques et des tranches horaires. Dans l'exemple non limitatif d'un réseau UMTS, la mesure unitaire du trafic se situe au niveau de la cellule.

Dans un mode de réalisation de l'invention, les données sur le trafic actuel sont fournies par des moyens compteurs (4) de type APIC (Analyse de la Performance à partir d'Indicateurs et Compteurs). Ces moyens compteurs (4) permettent de stocker durant plusieurs semaines les compteurs des centres de supervision (OMC) et peuvent fournir des indicateurs complexes à partir de l'évolution de ces compteurs. Un outil de type APIC permet par exemple de consolider au niveau national l'extraction des compteurs des différents centres de supervision (OMC). Les mesures sont par exemple des moyennes calculées à partir des mesures prises en tout point ou pixel sur une semaine et peuvent être regroupées dans une base de données accessible par le système (1), sous la forme de fichiers ou tables de trafic.

Dans le mode de réalisation de la figure 5, les pixels (301, 302, 303) associent une couleur d'identification ou une trame graphique ou analogue en fonction de chaque niveau de valeur de trafic (nvt), exprimé en mE/km$^2$ ou unité équivalente de trafic représentative de l'occupation de ressources radio. Par exemple, les pixels (301) correspondant à un trafic entre 10000 et 30000 mE/km$^2$ sont représentés en couleur chaude en trame foncée, les pixels (302) correspondant à un trafic moindre supérieur à 500 mE/km$^2$ sont représentés en couleur chaude claire et les pixels (303) à faible trafic avec une autre couleur. De manière non limitative, une gradation beaucoup plus étroite des niveaux de valeur de trafic (nvt) est préférentiellement envisagée pour permettre une meilleure analyse du réseau (N).

La carte de répartition du trafic (30) ainsi obtenue présente l'avantage d'être indépendante du système ou de l'infrastructure de radiocommunication utilisée et du réseau cellulaire correspondant, ce qui permet de prévoir efficacement le trafic quand on change de système. Des porteuses additionnelles devront ainsi être ajoutées là où le trafic le nécessite. Par exemple, certains secteurs (Sc, figure 1) ayant un trafic élevé pourront donc être dotés de 3 porteuses (Po) tandis qu'une seule porteuse pourra suffire pour d'autres secteurs correspondant à des zones de faible trafic.

Une fois le nombre d'émetteurs (E) déterminé, le système (1) de l'invention permet avantageusement de planifier conjointement la puissance P et la fréquence f de chaque porteuse (Po) à l'intérieur de chaque secteur (Sc) d'émission. En référence à la figure 1, le module de calcul (10) est par exemple doté de moyens d'association pour associer des porteuses (Po1, Po2, PoN-1, PoN) d'un émetteur (E) déterminé à des zones de service (2), en utilisant les données (d1, d2, d3, d4) stockées dans les moyens de mémorisation (11) pour distribuer de façon équitable et optimisée le trafic total (T) à écouler du secteur (Sc) dans ces zones de service (2). Autrement dit, le système vise à associer chaque porteuse (Po) à une zone de service (2) de façon optimisée pour que chaque porteuse (Po) prenne en charge une part égale (T/N) du trafic total (T) à écouler dans un secteur (Sc).

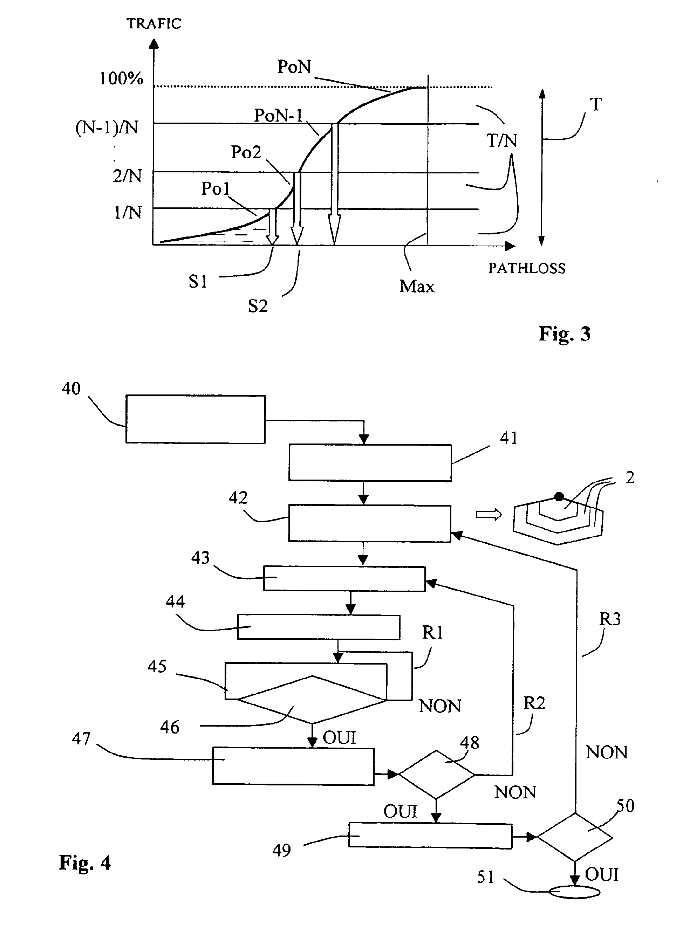

En référence à la figure 3, les zones de service (2) peuvent être découpées en fonction de seuils (S1, S2) d'atténuation du signal d'émission/réception radio. Cela se traduit dans la pratique par un découpage en couronnes géographiques pour les zones de service (21, 22, 23), comme illustré aux figures 1 et 2. Dans l'exemple de la figure 3, les moyens d'association du module de calcul (10) assurent une distribution du trafic total (T) à écouler du secteur (Sc) en N parts de trafic (T/N) dans N zones de services (2) complémentaires déterminées en fonction de leur atténuation radio. Ces moyens associent de plus une fréquence déterminée (f1, f2, f3) à chaque zone de service (21, 22, 23), de sorte que les différentes porteuses (Po) utilisées dans un secteur (Sc) sont respectivement associées à une seule zone de service (2) du secteur (Sc). La délimitation des couronnes est déterminée par secteur (Sc) en fonction de seuils d'atténuation (S1, S2, figure 3). Par exemple une première zone de service (21) regroupe les pixels ayant une atténuation de propagation du signal radio en émission/réception inférieure à un premier seuil déterminé (S1), tandis qu'au moins une seconde zone de service (22, 23) regroupe les pixels ayant une atténuation de propagation du signal radio en émission/réception comprise entre ledit premier seuil (S1) et un maximum d'atténuation prédéterminé (Max).

Le système informatique (1) comporte selon l'invention des moyens (13) d'ajustement de la puissance d'émission pour que chaque porteuse (Po) prenne en charge le trafic à écouler sur une couronne géographique bornée par les puissances respectives des porteuses voisines et/ou co-localisées. Le système (1) est adapté pour calculer les seuils de puissance au sein d'un même secteur (Sc) et dispose de moyens (13) pour ajuster la puissance d'émission de chacune des porteuses (Po) en fonction d'une détermination par le module de calcul (10) d'un partage de la puissance de l'émetteur (E) entre les porteuses (Po) d'un même secteur (Sc).

La redirection de chaque terminal radio utilisateur sur l'une ou l'autre des fréquences d'un même secteur (Sc) est gérée par le système informatique (1) en fonction par exemple du paramétrage réseau, de la différence de niveau de champs reçu entre les fréquences du secteur (Sc), et de la charge des différentes fréquences du secteur (Sc). L'optimisation réalisée par le système porte sur le sens descendant, de la station de base (BTS) vers le terminal radio, car le trafic de données (trafic data) est fortement asymétrique.

Le procédé de planification de puissance va à présent être plus spécifiquement décrit en liaison avec les figures 1 à 4.

Le procédé selon l'invention s'applique à un réseau cellulaire de radiocommunication (N) à accès de type CDMA et nécessite une étape (40) d'initialisation au cours de laquelle le système (1) initialise l'ensemble des paramètres de configuration du problème à résoudre, et en particulier :

- une liste (d21) des secteurs (Sc) et leurs caractéristiques de puissance disponible ;
- des matrices d'atténuation de propagation (d30) pour chaque secteur ;
- une matrice de répartition du trafic (d41) ;
- un coefficient d'utilisation représentatif d'un volume de trafic (d42) ;
- des spécifications (d22) de nombre de porteuses par secteur ;
- des règles de correspondance (d23) pour associer des porteuses à des amplificateurs d'émetteur ; et
- des paramètres d'estimation (d5) prévus pour être utilisés dans au moins une fonction de convergence (TEMP) servant à vérifier que ledit ajustement des puissances correspond notamment à l'obtention d'un maximum de la somme des capacités d'écoulement de trafic des porteuses (Po) sur l'ensemble des secteurs (Sc).

Une étape (41) de calcul de la répartition du trafic sur une zone correspondant à la couverture du réseau (N) est effectuée au préalable pour permettre l'optimisation ultérieure par planification de la puissance de chaque émetteur (E). Cette étape (41) de calcul de la répartition du trafic utilise les cartes de répartition de trafic pour estimer le trafic en chacun des pixels et prend en compte, par l'intermédiaire des données (d3) représentatives de l'atténuation radio en émission/réception pour chaque secteur (Sc), une atténuation Si entre émetteur et récepteur sur le secteur considéré ainsi qu'une probabilité d'assignation sur le secteur en fonction du champ reçu et du niveau de réception des secteurs voisins.

Le trafic peut être orienté par l'outil RRM ("Radio Resources Management") de la technologie d'accès radio sur l'une ou l'autre des porteuses en fonction d'un mode algorithmique spécifique. Par exemple, le choix peut se fonder sur un critère de niveau de champs reçu par rapport à des seuils de référence. Dans une première phase, la répartition de trafic en fonction de l'atténuation de propagation estimée entre l'émetteur (E) et chaque point peut être définie pour chaque secteur de chaque station (BTS), comme illustré à la figure 3. Sur chaque zone élémentaire de couverture représentée par un pixel (301, 302, 303) de coordonnées "x, y" et pour chaque secteur (Sc), le procédé utilise :

- l'atténuation « pathloss » entre émetteur et récepteur sur le secteur considéré avec
- ppath (x, y) = 1 si pathloss (x, y) = PATHLOSS, sinon ppath (x, y) = 0
- la probabilité pass (secteur, x,y) d'assignation sur le secteur (Sc) en fonction de ce champ reçu et du niveau de réception des secteurs voisins, ladite probabilité étant calculée au vu de l'écart type du modèle de prédiction
- l'estimation de trafic en ce point "trafic (x,y)" provenant de la cartographie du trafic sur la zone d'étude.

La fonction pathloss (x, y) correspond à l'atténuation radio qui est fonction de la distance par rapport à l'émetteur (E). Cette fonction est spécifiée par exemple par une formule explicite utilisant des paramètres de propagation ou obtenue par calibration avec une liste de paramètres, et peut délivrer une valeur entière appelée PATHLOSS en chaque point où il y a un trafic. Cette fonction fournit ainsi les valeurs d'atténuation PATHLOSS à utiliser pour permettre de répartir le trafic au sein d'un secteur (Sc). On obtient selon l'invention, en balayant l'ensemble des valeurs PATHLOSS pour chaque secteur (Sc), la fonction de distribution cumulative du trafic à écouler en fonction du niveau de l'atténuation PATHLOSS sur le secteur considéré, comme illustré à la figure 3 :

$$\text{Trafic(secteur, PATHLOSS)} = \int \text{trafic}(x,y) * \rho_{ass}(\text{secteur}, x,y) * \rho_{ass}(x,y)\, dxdy$$

Dans l'exemple de la figure 3, des seuils (S1, S2) d'atténuation sont recherchés pour répartir de manière égale la demande de trafic en N parts égales. Le nombre N de porteuses (Po1, Po2, PoN-1, PoN) sur le secteur (Sc) peut être soit spécifié directement par l'utilisateur du système (1), soit calculé par l'intermédiaire du module de calcul (10) du système (1). Dans ce dernier cas, le trafic total (T) dans un secteur (Sc) est calculé en intégrant la fonction de distribution illustrée à la figure 3 pour toutes les valeurs d'atténuation PATHLOSS et en multipliant par un coefficient d'usage (permettant de représenter le volume de trafic) spécifié par l'utilisateur. Le trafic total (T) du secteur (Sc) est donc obtenu par la formule suivante :

$$\text{Trafic (secteur)} = \text{usage} * \int_{\text{PATHLOSS}} \text{TRAFIC (secteur, PATHLOSS)}$$

Les moyens d'association du module de calcul (10) déterminent le nombre N de porteuses nécessaires (Po) résultant de la division de ce trafic total (T) par la capacité de chaque porteuse telle que paramétrée par l'utilisateur. Dans un mode de réalisation de l'invention, si le nombre de porteuses nécessaire dépasse le nombre de fréquences radio disponibles, un message d'avertissement sera affiché par le dispositif interactif (3).

En référence à la figure 4, le module de calcul (10) réalise une étape (42) d'allocation des porteuses à des zones de service (2) en prenant en compte le nombre N de porteuses (Po) déterminé pour chaque émetteur (E). Les seuils d'atténuation (S1, S2) permettant de répartir de manière égale le trafic total (T) à écouler entre N parts égales (T/N) sont calculés par les moyens d'association du module de calcul (10) pour découper les zones de service (2). Lors de cette étape (42), le module de calcul (10) assure donc la distribution du trafic total (T) à écouler dans N zones de services (2) complémentaires déterminées en fonction de leur atténuation radio et formant géographiquement des couronnes ayant un éloignement croissant par rapport à l'émetteur (E), comme illustré aux figures 1 et 2. Pour ne pas pénaliser les zones de service (2) les plus éloignées par rapport à l'émetteur, le procédé selon l'invention propose avantageusement d'attribuer des puissances plus élevées à ces zones éloignées.

L'ajustement de puissance doit toutefois être optimisé pour utiliser aux mieux les ressources radio du réseau (N). Dans un mode de réalisation préféré de l'invention, le module de calcul (10) réalise un partage de la puissance de l'émetteur (E) entre les porteuses (Po) d'un même secteur (Sc) en utilisant un programme d'optimisation adapté pour obtenir selon un premier critère un maximum pour la somme des capacités d'écoulement de trafic des porteuses (Po) de l'ensemble des secteurs (Sc), et selon un deuxième critère, un minimum de dispersion des capacités d'écoulement de trafic apportées individuellement par les différentes porteuses (Po) du secteur (Sc). Des paramètres d'estimation (d5) stockées dans les moyens de mémorisation (11) peuvent être utilisés par le module de calcul (10) pour permettre d'optimiser le partage de la puissance de l'émetteur (E) entre les porteuses (Po).

En référence aux figures 1 et 4, l'ajustement de puissance n'intervient qu'après une étape (44) de planification de fréquences incluant l'attribution d'une fréquence déterminée (f1, f2, f3) à chaque zone de service (21, 22, 23), de sorte que les différentes porteuses (Po) utilisées dans un secteur (Sc) sont respectivement associées à une seule zone de service dudit secteur (Sc). En effet, une fois la géométrie de la zone de couverture établie à l'aide du découpage en zones de services (2), il faut ensuite mettre en oeuvre une phase (43, 44) de planification des fréquences, par exemple similaire ou à l'identique de ce qui peut se faire pour le GSM selon l'enseignement du brevet EP 1 283 647 (ou son équivalent US 2003/07805). Une étape (43) de calcul des contraintes de brouillage entre porteuses (Po) est réalisée, à l'aide d'une matrice de compatibilité entre toutes les porteuses (Po) de toutes les cellules. Le système (1) peut être paramétré pour marquer les différentes porteuses (Po) d'un secteur (Sc) comme exclusives les unes des autres pour l'allocation d'une fréquence radio. Comme l'invention s'applique à des technologies d'échange de données, comme 3GPP HSDPA et CDMA 2000 1x EvDO, qui supportent un facteur de réutilisation de 1 pour les fréquences, l'influence des brouillages des fréquences adjacentes peut être ignorée, ce qui permet d'accélérer la phase (43, 44) de planification des fréquences. L'étape (44) de planification de fréquences proprement dite est ensuite lancée séquentiellement. Il faut remarquer ici que cette étape est plus aisée que pour le GSM car le nombre de fréquences est bien moins élevé dans les systèmes de type CDMA (plus grande largeur de canal, les canaux ayant par exemple une largeur de 1,25 ou 5 MHz).

Le résultat de l'étape (44) de planification de fréquences permet alors de calculer des cartes de rapport signal à bruit SNR en chaque point et pour chaque porteuse (Po), de la façon suivante :

$$SNR(porteuse, x,y) = \rho_{ass}(porteuse, x,y) * \frac{puissance\_reçue(porteuse, x,y)}{Bruit + \Sigma_{brouilleur}\, puissance\_reçue(brouilleur)}$$

Le trafic pouvant être écoulé par une porteuse, ou autrement dit la capacité d'une porteuse (Po), peut ensuite être estimée en fonction des puissances allouées à chaque porteuse d'un émetteur (E). Selon l'invention, cette capacité est déterminée à l'aide d'une fonction Perf(SNR) discrète paramétrée par l'utilisateur en fonction des caractéristiques de la technologie d'accès radio :

$$Capacité(porteuse) = \int_{x,y} Perf(SNR(porteuse, x,y))$$

Par défaut, la formule de Shannon-Hartley peut être utilisée :

$$Perf(SNR) = W * Log_2(1 + SNR)$$

où W correspond à la largeur de bande (Hz) et SNR est le rapport signal à bruit (en considérant un bruit blanc gaussien), Perf(SNR) correspondant à une capacité ou débit (par l'émetteur) en bit/s.

Sur le secteur (Sc), la capacité d'écoulement de trafic est la somme du trafic pouvant être écoulé par chaque porteuse (Po1, Po2, PoN-1, PoN) du secteur, cette capacité de trafic étant calculée comme suit :

$$\text{Capacité(secteur)} = \Sigma_i \text{ Capacité(Pi du secteur)} \text{ ; i compris entre 1 et N.}$$

L'étape (45) d'ajustement des puissances peut donc être réalisée pour chacune des porteuses (Po). Cette étape (45) comprend, comme mentionné ci-dessus, la détermination pour chaque zone de service (2) de rapports signal à bruit en chaque pixel, puis la détermination de capacités d'écoulement de trafic par les porteuses (Po) au sein d'une zone de service (2). Cette étape consiste alors en un partage de la puissance de l'émetteur (E) entre les porteuses d'un même secteur (Sc). Ce partage est réalisé de façon déterminée par le module de calcul (10) pour qu'un maximum de la somme des capacités d'écoulement de trafic des porteuses (Po) de l'ensemble des secteurs (Sc) soit obtenu. En plus de ce premier critère, il convient aussi de réaliser une répartition égale du trafic entre les zones de service (2). Pour cela, un second critère d'équilibre du trafic entre chaque porteuse (Po) d'un même secteur (Sc) est pris en compte.

Le partage est permis par un réglage des émetteurs (E) des stations de base (BTS). En effet, l'amplification de puissance large bande permet d'émettre un signal de puissance différente sur plusieurs porteuses (Po) en partageant la puissance de l'amplificateur. Les moyens (13) d'ajustement du système informatique (1) sont prévus pour permettre d'ajuster le partage de cette puissance. Une répartition inégale de la puissance entre chaque canal d'émission permet d'optimiser la couverture radio, cette dernière étant bornée par la porteuse (PN) disposant de la puissance la plus forte. Comme montré à la figure 2, une répartition inégale de puissance entre plusieurs zones de services (2) d'un secteur (Sc) permet de transmettre les données à la zone de service la plus éloignée (donc ayant la plus forte atténuation radio) avec un très bon débit grâce à l'attribution d'une majorité de la puissance totale pour la porteuse (PN) associée à cette zone formant la dernière couronne géographique. Dans un secteur (Sc) à trois zones de services comme illustré à la figure 2, si par exemple l'amplificateur a une puissance de 40 W pour l'émission radio, une puissance (P2) de 30 W pourra être attribuée à la porteuse (Po2, fréquence f2) qui dessert la zone formant dernière couronne, une puissance (P3) de 8 W pourra être attribuée à la porteuse (Po3, fréquence f3) qui dessert la zone formant deuxième couronne, et une puissance (P1) de 2 W seulement pourra être attribuée à la porteuse (Po1, fréquence f1) qui dessert la zone de service la plus proche de l'émetteur (E) et correspond à la première couronne.

Les moyens d'ajustement (13) du système (1) réalisent le partage en prenant en compte notamment les informations suivantes paramétrées par l'utilisateur :

- la puissance de l'amplificateur servant la porteuse (Po) ;
- la liste des autres porteuses (Po) amplifiées par le même amplificateur.

En référence à la figure 4, l'étape (45) d'ajustement des puissances (P1, P2, P3, P1', P2', P3') de chacune des porteuses (Po) peut comprendre enfin, pour chaque secteur (Sc), une première étape (46) d'estimation de la convergence entre le premier critère correspondant à l'obtention d'un maximum de la somme des capacités d'écoulement de trafic des porteuses (Po) de l'ensemble des secteurs (Sc) et le second critère correspondant à l'obtention d'un minimum de dispersion des capacités d'écoulement de trafic apportées individuellement par les différentes porteuses (Po) du secteur (Sc). Cette étape d'estimation de convergence (46) comprend par exemple le calcul d'une fonction de convergence (TEMP) paramétrée PAR l'utilisateur. Cette fonction de convergence (TEMP) peut correspondre à une différence entre une première valeur représentative du premier critère et une valeur représentative du second critère. L'évolution de cette différence est calculée, par exemple par détermination de la variation de cette différence entre un nombre paramétré Xi de calculs successifs de ladite fonction (TEMP) réalisés pour la prise en compte des modifications de la répartition de puissance, puis cette évolution est comparée avec un seuil d'acceptation Xa à ne pas dépasser pour que la convergence soit acceptable. A titre d'exemple non limitatif, pour Xi =1, l'évolution calculée correspond à la variation entre deux calculs successifs. Une réitération (R1) du partage de la puissance de l'émetteur entre les porteuses (Po) d'un même secteur (Sc) est alors déclenchée en cas de dépassement du seuil d'acceptation Xa par ladite variation, lors de la première étape (46) d'estimation de la convergence entre lesdits premier et second critères.

Dans un mode de réalisation de l'invention, la fonction de convergence (TEMP) est définie comme suit :

$$\text{TEMP} = C1 * \Sigma_S \text{ capacité(Sc)} - C2 * \Sigma_S \Sigma_{Pi} |\text{capacité (Pi)} - \text{capacité(Sc)}/N_{secteur}|$$

où :

- C1 et C2 sont des poids respectifs du premier et du second critère ;
- $\Sigma_S$ capacité(Sc) est la somme des capacités de chaque secteur (Sc).
- capacité(Sc)/$N_{secteur}$ est la moyenne de capacité des porteuses dans un secteur (Sc) de N porteuses.

Cette fonction de convergence (TEMP) est par exemple calculée pour chaque variation élémentaire de la puissance d'une porteuse (Po), les limites de chaque amplificateur étant par ailleurs respectées. En référence à la figure 4, la première étape (46) d'estimation de la convergence des deux critères est effectuée pour optimiser le partage des puissances, l'optimisation exploitant une méthode basée sur les techniques de « recuit » simulé. Deux paramètres tels qu'un seuil d'acceptation Xa et un nombre d'itérations Xi peuvent être fixés par l'utilisateur pour que ladite optimisation soit effectuée jusqu'à ce que la variation de la fonction de convergence (TEMP) au cours de Xi itérations soit inférieure au seuil Xa. La solution correspondant à la valeur la plus élevée pour la fonction de convergence (TEMP) est conservée. En effet, comme la valeur de cette fonction (TEMP) correspond à une différence entre un premier élément représentatif de la capacité globale et un second élément représentatif de la disparité des capacités de porteuses (Po) à l'intérieur de chaque secteur (Sc), on comprend que cette valeur sera d'autant plus grande que la capacité globale est élevée (premier critère avec pondération C1) et que le trafic dans les secteurs (Sc) est réparti entre les zones de service (2) de façon égale (second critère avec pondération C2).

Lorsque le résultat engendré pour le partage des puissances provoque des modifications rendant sous-optimale la phase (43, 44) de planification des fréquences, en raison des changements de puissance au niveau des émetteurs (E), il est nécessaire de refaire une planification de fréquence avec ces nouvelles puissances. Comme illustré à la figure 4, l'étape (45) d'ajustement des puissances est donc suivie d'une étape (47) de calcul de nouvelles contraintes en fréquence résultant de l'ajustement des puissances. Une seconde étape (48) d'estimation de la convergence entre lesdits premier et second critères est ensuite réalisée, avec là encore l'utilisation d'un seuil d'acceptation Xa' et un nombre d'itérations Xi' paramétrés par l'utilisateur. Selon le même principe que dans la première étape d'estimation (46), le module de calcul (10) retient parmi les différentes solutions (mémorisées dans le système) la solution permettant l'obtention de la valeur la plus élevée pour la fonction de convergence (TEMP).

Tant que le nombre d'itérations Xi n'est pas atteint, la première étape (46) d'estimation ne sélectionne pas de solution et reboucle automatiquement sur l'étape (45) d'ajustement des puissances. Lorsque ce nombre Xi est atteint et dépassé, une comparaison de la variation est effectuée entre le seuil d'acceptation Xa et ladite évolution de la fonction de convergence (TEMP). Tant que la variation de la fonction (TEMP) sur Xi cycles dépasse le seuil Xa, il est considéré qu'il n'y a pas de convergence, ce qui déclenche la réitération (R1) du partage de la puissance.

De la même façon, la seconde étape (48) d'estimation de la convergence entre lesdits premier et second critères sera suivie d'une réitération (R2) des étape (43, 44) précédentes de calcul de contraintes de brouillage entre porteuses (Po) et de planification de fréquences tant que la variation de la fonction (TEMP) pour Xi' cycles dépasse le seuil d'acceptation Xa'. En pratique, compte tenu du faible nombre de fréquences, on peut choisir Xi'=2 et un résultat satisfaisant est obtenu après quelques itérations sur l'étape (43) de calcul de contraintes. Ainsi, la seconde étape (48) d'estimation peut être déclarée positive lorsque la variation de la fonction (TEMP) au cours de Xi'=2 itérations est inférieure au seuil d'acceptation Xa'. Naturellement on peut aussi prendre Xi'=1 ou prendre des valeurs supérieures à 2.

En référence à la figure 4, la solution permettant l'obtention de la valeur la plus élevée pour la fonction de convergence (TEMP) obtenue à l'issue de la seconde étape (48) d'estimation sert dans une étape (49) de nouveau calcul de zones de service (2) de chaque porteuse (Po). Cette étape (49) de nouveau calcul prend en compte notamment les modifications résultant de l'ajustement précédant des puissances. Il s'ensuit une troisième étape (50) d'estimation de la convergence entre lesdits premier et second critères, selon le même principe que les deux précédentes étapes d'estimation (46, 48). Le seuil d'acceptation Xa'' et le nombre d'itérations Xi'' sont paramétrés par l'utilisateur pour s'assurer de la convergence dans l'évolution de la fonction de convergence (TEMP).

Tant que la variation de la fonction (TEMP) pour Xi'' cycles dépasse le seuil d'acceptation Xa'', la troisième étape (50) d'estimation de la convergence entre lesdits premier et second critères est suivie d'une réitération (R3) de l'étape (42) d'estimation des zones de services (2) où doivent être allouées les porteuses (Po). En pratique, compte tenu du faible nombre de fréquences (par rapport au GSM), un petit nombre d'itérations permet de converger vers un résultat satisfaisant. Lorsque la troisième étape (48) d'estimation est déclarée positive, les paramètres correspondant à la solution optimisée sont conservés et mémorisés lors d'une étape (50) de finalisation du processus.

Lors de cette étape (50) de finalisation, le système informatique (1) conserve donc les paramètres d'optimisation suivants :

- le nombre de porteuses (Po) ;
- la fréquence à utiliser pour chacune des porteuses (Po) ;
- la puissance pour chacune des porteuses (Po) ; et
- pour chaque porteuse (Po), les seuils de puissance reçue pour la sélection de la porteuse parmi les différentes porteuses du secteur (Sc).

Un des avantages de l'invention est de fournir une solution optimisée aux problèmes des zones de couverture de faible débit dans les systèmes de transmission de données de troisième génération qui n'exigent pas un raccordement à deux cellules de même fréquence (contrainte de "soft handover"). L'invention donne la possibilité de maximiser la capacité du réseau (N), en ajustant la puissance de chaque porteuse (Po) de façon à écouler efficacement la totalité du trafic et à offrir un débit optimisé partout dans la zone de couverture. En outre ce type de solution permet de s'adapter à l'évolution des besoins en capacité d'un réseau, en distribuant de façon inégale la puissance entre les porteuses (Po). Cette répartition est économe puisqu'elle évite la plupart du temps le recours à un amplificateur supplémentaire pour l'émission de données.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes et l'invention ne doit pas être limitée aux détails donnés ci-dessus.

**Revendications**

1. Procédé de planification de puissance dans un réseau cellulaire de radiocommunication (N) ayant pour caractéristique de permettre la réutilisation d'une même fréquence sur toutes les cellules du réseau (par exemple accès de type CDMA), doté de stations radioélectriques terrestres de base (BTS) disposant d'émetteurs (E) pour transmettre des données dans des secteurs d'émission (Sc) déterminés et assurer une couverture radio de zones définissant des cellules respectives, le procédé étant mis en oeuvre par l'intermédiaire d'un système informatique (1) doté de moyens de mémorisation (11) stockant des données (d1) représentatives de zones géographiques découpées en une pluralité de points ou pixels (301, 302, 303) selon le découpage dudit réseau, des données (d2) caractéristiques des secteurs (Sc) et des émetteurs (E) du réseau, des données (d3) représentatives de l'atténuation radio en émission/réception pour chaque secteur (Sc), des données (d4) représentatives de la répartition et du volume du trafic dans le réseau, le procédé étant **caractérisé en ce qu'**un module de calcul (10) du système informatique (1) réalise, pour chaque secteur d'émission (Sc) associé à un émetteur (E) ayant une pluralité de porteuses (Po1, Po2, PoN-1, PoN), une étape (42) d'allocation des porteuses à des zones de service (2), le module de calcul (10) utilisant les données (d1, d2, d3, d4) stockées dans les moyens de mémorisation (11) pour distribuer le trafic total (T) à écouler du secteur (Sc) en N parts de trafic (T/N) dans N zones de services (2) complémentaires déterminées en fonction de leur atténuation radio et formant géographiquement des couronnes ayant un éloignement croissant par rapport à l'émetteur (E), le procédé comportant en outre :

   - une étape (44) de planification de fréquences incluant l'attribution d'une fréquence déterminée (f1, f2, f3) à chaque zone de service (21, 22, 23), de sorte que les différentes porteuses (Po) utilisées dans un secteur (Sc) sont respectivement associées à une seule zone de service dudit secteur (Sc) ;
   - une étape (45) d'ajustement des puissances de chacune des porteuses, incluant la détermination par le module de calcul (10), pour chaque zone de service (2), de rapports signal à bruit en chaque pixel et d'une capacité d'écoulement de trafic par la porteuse (Po) associée à cette zone de service (2), un partage de la puissance de l'émetteur entre les porteuses d'un même secteur (Sc) étant réalisé de façon déterminée par le module de calcul (10) pour que ladite étape (45) d'ajustement des puissances corresponde à l'obtention d'un maximum de la somme des capacités d'écoulement de trafic des porteuses (Po) pour chaque secteur (Sc), ledit maximum résultant notamment d'au moins une comparaison par le module de calcul (10) entre plusieurs solutions distinctes de partage de puissance entre les porteuses (Po).

2. Procédé selon la revendication 1, dans lequel le partage de la puissance de l'émetteur (E) entre les porteuses (Po) d'un même secteur (Sc) est réalisé de façon déterminée par le module de calcul (10) pour que ladite étape (45) d'ajustement des puissances corresponde à l'obtention d'un minimum de dispersion des capacités d'écoulement de trafic apportées individuellement par les différentes porteuses (Po) du secteur (Sc).

3. Procédé selon la revendication 1 ou 2, dans lequel les zones de services (2) sont déterminées dans un secteur (Sc) en fonction de seuils d'atténuation (S1, S2), une première zone de service (21) regroupant les pixels ayant une atténuation de propagation du signal radio en émission/réception inférieure à un premier seuil déterminé (S1), tandis qu'au moins une seconde zone de service (22, 23) regroupe les pixels ayant une atténuation de propagation du signal radio en émission/réception comprise entre ledit premier seuil (S1) et un maximum d'atténuation prédéterminé (Max).

4. Procédé selon une des revendications 1 à 3, comprenant une étape (40) d'initialisation des paramètres de configuration suivants :

  - une liste (d21) des secteurs (Sc) et leurs caractéristiques de puissance disponible ;
  - des matrices d'atténuation de propagation (d30) pour chaque secteur ;
  - une matrice de répartition du trafic (d41) ;
  - un coefficient d'utilisation représentatif d'un volume de trafic (d42) ;
  - des spécifications (d22) de nombre de porteuses par secteur ;
  - des règles de correspondance (d23) pour associer des porteuses à des amplificateurs d'émetteur ;
  - des paramètres d'estimation (d5) prévus pour être utilisés dans au moins une fonction de convergence (TEMP) servant à vérifier que ledit ajustement des puissances correspond notamment à l'obtention d'un maximum de la somme des capacités d'écoulement de trafic des porteuses (Po) de l'ensemble des secteurs (Sc).

5. Procédé selon une des revendications 1 à 4, dans lequel les données (d4) représentatives de la répartition et du volume du trafic dans le réseau comprennent des cartes de répartition de trafic réalisées par l'intermédiaire du système informatique (1), par utilisation des données représentatives de zones géographiques et de données représentatives du trafic dans le réseau des abonnés audit réseau incluant des mesures quantitatives et qualitatives du trafic des abonnés sur le réseau, lesdites mesures correspondant à au moins une tranche horaire déterminée, au moins une carte (30) de répartition du trafic du réseau étant obtenue après une sélection d'au moins une zone géographique par des moyens interactifs (3) entre l'utilisateur et ledit système informatique (1) et une récupération par ledit système (1) de données représentatives du trafic correspondant à ladite zone géographique sélectionnée et à une tranche horaire déterminée pour former, par exploitation de ces données par le système informatique (1), des données représentatives de cellules de couverture associées à chaque émetteur.

6. Procédé selon la revendication 5, dans lequel les données représentatives du trafic dans le réseau de radiocommunication (N) comprennent des données fournies par des moyens compteurs (4) et extraites d'au moins un centre de supervision des équipements (OMC) par des moyens d'extraction et de mise en table (15) dudit système informatique (1).

7. Procédé selon la revendication 5 ou 6, dans lequel l'étape (42) d'allocation des porteuses à des zones de service (2) est précédée d'une étape (41) de calcul de la répartition du trafic sur une zone correspondant à la couverture du réseau (N), l'étape (41) de calcul de la répartition du trafic utilisant les cartes de répartition de trafic pour estimer le trafic en chacun des pixels et prend en compte, par l'intermédiaire des données (d3) représentatives de l'atténuation radio en émission/réception pour chaque secteur (Sc), une atténuation entre émetteur et récepteur sur le secteur considéré ainsi qu'une probabilité d'assignation sur le secteur en fonction du champ reçu et du niveau de réception des secteurs voisins.

8. Procédé selon la revendication 7, dans lequel l'étape (41) de calcul de la répartition du trafic comprend le calcul d'une fonction de distribution cumulative du trafic à écouler en fonction du niveau de l'atténuation de la propagation sur chaque secteur (Sc) considéré.

9. Procédé selon une des revendications 1 à 8, dans lequel l'étape (42) d'allocation des porteuses à des zones de service (2) comprend, pour au moins un des secteurs (Sc), le calcul d'un trafic total (T) à écouler et la détermination d'un nombre N de porteuses (Po) suffisant pour que la capacité de l'ensemble des porteuses du secteur permette d'écouler le trafic total (T).

10. Procédé selon une des revendications 1 à 9, dans lequel l'étape (44) de planification de fréquences est précédée d'une étape (43) de calcul de contraintes de brouillage entre porteuses (Po) incluant le calcul d'une matrice de compatibilité entre toutes les porteuses (Po) de toutes les cellules.

11. Procédé selon une des revendications 2 à 10, dans lequel l'étape (45) d'ajustement des puissances de chacune des porteuses (Po) comprend pour l'ensemble des secteurs (Sc) une première étape (46) d'estimation de la convergence entre un premier critère correspondant à l'obtention d'un maximum de la somme des capacités d'écoulement de trafic des porteuses (Po) des secteurs (Sc) et un second critère correspondant à l'obtention d'un minimum de dispersion des capacités d'écoulement de trafic apportées individuellement par les différentes porteuses (Po) de chaque secteur (Sc).

12. Procédé selon la revendication 11, dans lequel ladite étape (45) d'ajustement des puissances est suivie d'une étape (47) de calcul de nouvelles contraintes en fréquence résultant de l'ajustement des puissances, une seconde étape (48) d'estimation de la convergence entre lesdits premier et second critères étant ensuite réalisée.

**13.** Procédé selon la revendication 12, comprenant une troisième étape (50) d'estimation de la convergence entre lesdits premier et second critères, réalisée juste après une étape (49) de nouveau calcul de zones de service (2) de chaque porteuse (Po), ladite étape (49) de nouveau calcul prenant en compte notamment les modifications résultant de l'ajustement des puissances.

**14.** Procédé selon une des revendications 11 à 13, dans lequel chaque étape d'estimation de convergence (46, 48, 50) comprend au moins un calcul de ladite fonction de convergence (TEMP) du type correspondant à une différence entre une première valeur représentative du premier critère et une valeur représentative du second critère, puis une comparaison de la variation de cette différence avec un seuil d'acceptation à ne pas dépasser pour que la convergence soit acceptable.

**15.** Procédé selon la revendication 14, dans lequel une réitération (R1) du partage de la puissance de l'émetteur entre les porteuses d'un même secteur (Sc) est déclenchée en cas de dépassement du seuil d'acceptation lors de la première étape (46) d'estimation de la convergence entre lesdits premier et second critères.

**16.** Procédé selon la revendication 14 ou 15, dans lequel une réitération (R2) des étapes (43, 44) de calcul de contraintes de brouillage entre porteuses (Po) et de planification de fréquences est déclenchée en cas de dépassement du seuil d'acceptation lors de la seconde étape (48) d'estimation de la convergence entre lesdits premier et second critères.

**17.** Procédé selon une des revendications 14 à 16, dans lequel une réitération (R3) de l'étape (42) d'allocation des porteuses à des zones de service (2) est déclenchée en cas de dépassement du seuil d'acceptation lors de la troisième étape (50) d'estimation de la convergence entre lesdits premier et second critères.

**18.** Système informatique (1) pour la mise en oeuvre du procédé selon l'une quelconque des revendications 1 à 17, comportant un module de calcul (10) et des moyens de mémorisation (11) pour stocker des données (d1) représentatives de zones géographiques découpées en une pluralité de points ou pixels (301, 302, 303) selon le découpage dudit réseau, des données (d2) caractéristiques des secteurs (Sc) et des émetteurs (E) du réseau, des données (d3) représentatives de l'atténuation radio en émission/réception pour chaque secteur (Sc), des données (d4) représentatives de la répartition et du volume du trafic dans le réseau, **caractérisé en ce qu'**il comporte des moyens de sélection (12) pour sélectionner chaque secteur d'émission (Sc) associé à un émetteur (E), le module de calcul (10) comportant des moyens d'association pour :

- associer des porteuses (Po1, Po2, PoN-1, PoN) de l'émetteur (E) à des zones de service (2), en utilisant les données (d1, d2, d3, d4) stockées dans les moyens de mémorisation (11) pour distribuer le trafic total (T) à écouler du secteur (Sc) en N parts de trafic (T/N) dans N zones de services (2) complémentaires déterminées en fonction de leur atténuation radio ;
- associer une fréquence déterminée (f1, f2, f3) à chaque zone de service (21, 22, 23), de sorte que les différentes porteuses (Po) utilisées dans un secteur (Sc) sont respectivement associées à une seule zone de service dudit secteur (Sc) ;

ledit système informatique (1) comportant des moyens (13) pour ajuster la puissance d'émission de chacune des porteuses (Po) en fonction d'une détermination par le module de calcul (10) d'un partage de la puissance de l'émetteur (E) entre les porteuses d'un même secteur (Sc).

**19.** Système selon la revendication 18, dans lequel le module de calcul (10) réalise un partage de la puissance de l'émetteur (E) entre les porteuses (Po) d'un même secteur (Sc) en utilisant un programme d'optimisation adapté pour obtenir selon un premier critère un maximum pour la somme des capacités d'écoulement de trafic des porteuses (Po) de l'ensemble des secteurs (Sc), et selon un deuxième critère, un minimum de dispersion des capacités d'écoulement de trafic apportées individuellement par les différentes porteuses (Po) du secteur (Sc), des paramètres d'estimation (d5) stockées dans les moyens de mémorisation (11) étant utilisés par le module de calcul (10) pour permettre d'optimiser le partage de la puissance de l'émetteur (E) entre les porteuses (Po).

**20.** Système selon la revendication 18 ou 19, dans lequel les moyens d'association sont agencés pour prendre en compte des seuils d'atténuation (S1, S2) pour déterminer les zones de services (2) d'un secteur (Sc), les moyens d'association regroupant les pixels ayant une atténuation de propagation du signal radio en émission/réception inférieure à un premier seuil déterminé (S1) dans une première zone de service (21), et dans au moins une seconde zone de service (22, 23), les pixels ayant une atténuation de propagation du signal radio en émission/réception comprise entre ledit premier seuil (S1) et un maximum d'atténuation prédéterminé (Max).

**21.** Système selon une des revendications 18 à 20, comprenant dans une seconde mémoire (14) des données représentatives du trafic de données dans le réseau à au moins une tranche horaire déterminée, le système comportant en outre :

   - des moyens interactifs (3) entre l'utilisateur et ledit système (1), reliés aux moyens de sélection (12) pour sélectionner et afficher au moins une desdites zones géographiques,
   - des moyens de superposition à ladite zone géographique sélectionnée de données représentatives du trafic à une tranche horaire déterminée pour former au moins une carte de répartition (30) du trafic, affichée par lesdits moyens interactifs (3),
   - des moyens d'extraction et de mise en table (15), à partir de données, fournies par des moyens compteurs (4) et extraites d'au moins un centre de supervision des équipements (OMC), de séries de mesures en fonction des zones géographiques et des tranches horaires.

## Claims

**1.** Method of power planning in a cellular wireless communication network (N) having the characteristic that it allows the re-use of one and the same frequency on all the cells of the network (for example CDMA-type access), provided with terrestrial radio base stations (BTS) having transmitters (E) to transmit data to determined transmission sectors (Sc) and to ensure radio coverage of areas defining respective cells, the method being implemented by means of a computer system (1) provided with storage means (11) storing data (d1) representing geographical areas divided into a plurality of dots or pixels (301, 302, 303) depending upon the division of the said network, data (d2) characteristic of the sectors (Sc) and transmitters (E) of the network, data (d3) representing the transmit/receive radio attenuation for each sector (Sc), data (d4) representing the distribution and volume of the traffic in the network, the method being **characterised in that**, for each transmission sector (Sc) associated with a transmitter (E) having a plurality of carriers (Pol, Po2, PoN-1, PoN), a computing module (10) of the computer system (1) performs a step (42) of assigning carriers to service areas (2), the computing module (10) using the data (d1, d2, d3, d4) stored in the storage means (11) to distribute the total traffic (T) to be handled in the sector (Sc) into N shares of traffic (T/N) in N complementary services areas (2) determined as a function of their radio attenuation and geographically forming rings which are increasingly distant from the transmitter (E), the method also comprising:

   - a frequency planning step (44) including the assignment of a determined frequency (f1, f2, f3) to each service area (21, 22, 23) in such a way that the different carriers (Po) used in a sector (Sc) are respectively associated with a single service area of the said sector (Sc);
   - a power adjustment step (45) for each of the carriers, including the determination by the computing module (10), for each service area (2), of the signal-to-noise ratios in each pixel and of the traffic handling capacity of the carrier (Po) associated with this service area (2), the sharing of transmitter power between the carriers of one and the same sector (Sc) being effected in a manner determined by the computing module (10) so that the said power adjustment step (45) corresponds to obtaining a maximum value for the sum of the traffic handling capacities of the carriers (Po) for each sector (Sc), the said maximum value resulting in particular from at least one comparison by the computing module (10) between a plurality of separate solutions for sharing power between the carriers (Po).

**2.** Method as claimed in Claim 1, wherein the sharing of the power of a transmitter (E) between the carriers (Po) of one and the same sector (Sc) is effected in the manner determined by the computing module (10) so that the said power adjustment step (45) corresponds to obtaining a minimum dispersion of the traffic handling capacities provided individually by the different carriers (Po) of the sector (Sc).

**3.** Method as claimed in Claim 1 or Claim 2, wherein the service areas (2) are determined in a sector (Sc) as a function of attenuation thresholds (S1, S2), a first service area (21) grouping together the pixels in which the attenuation of the transmit/receive radio signal propagation is lower than a first determined threshold (S1), whilst at least one second service area (22, 23) groups together pixels in which the attenuation of the transmit/receive radio signal propagation is between the said first threshold (S1) and a predetermined maximum attenuation (Max).

4. Method as in any one of Claims 1 to 3, comprising a step (40) of initialising the following configuration parameters:

 - a list (d21) of the sectors (Sc) and their available power characteristics;
 - matrices of propagation attenuation (d30) for each sector;
 - a matrix of traffic distribution (d41);
 - a coefficient of use representing a traffic volume (d42);
 - specifications (d22) of the number of carriers per sector;
 - matching rules (d23) for associating carriers with transmitter amplifiers;
 - estimation parameters (d5) provided for use in at least one convergence function (TEMP) serving to verify that the said power adjustment corresponds in particular to obtaining a maximum value for the sum of the traffic handling capacities of the carriers (Po) of all of the sectors (Sc).

5. Method as claimed in any one of Claims 1 to 4, wherein the data (d4) representing the distribution and volume of the traffic in the network comprises traffic distribution maps produced by means of the computer system (1) by the use of data representing geographical areas and data representing the traffic in the network of subscribers to the said network including quantitative and qualitative measurements of the subscriber traffic on the network, the said measurements corresponding to at least one determined time slot, at least one network traffic distribution map (30) being obtained after selection of at least one geographical area by interactive means (3) between the user and the said computer system (1) and after retrieval by the said computer system (1) of data representing traffic corresponding to the said selected geographical area and to a determined time slot in order, by processing of these data by the computer system (1), to produce data representing covered cells associated with each transmitter.

6. Method as claimed in Claim 5, wherein the data representing the traffic in the wireless communication network (N) comprise data provided by counter means (4) and extracted from at least one operating and maintenance centre (OMC) by extraction and tabling means (15) of the said computer system (1).

7. Method as in either Claim 5 or Claim 6, wherein the step (42) of assigning carriers to service areas (2) is preceded by a step (41) of calculating the traffic distribution in an area corresponding to the coverage of the network (N), the step (41) of calculating the traffic distribution using the traffic distribution maps to estimate the traffic in each of the pixels and, by means of the data (d3) representing the transmit/receive radio attenuation for each sector (Sc), takes into account the attenuation between transmitter and receiver in the sector under consideration as well as a probability of assignment to the sector as a function of the received field and reception level of neighbouring sectors.

8. Method as claimed in Claim 7, wherein the step (41) of calculating the traffic distribution comprises the calculation of a cumulative distribution function of the traffic to be handled as a function of the level of propagation attenuation on each sector (Sc) under consideration.

9. Method as claimed in any one of Claims 1 to 8, wherein the step (42) of assigning carriers to service areas (2) comprises, for at least one of the sectors (Sc), the calculation of total traffic (T) to be handled and the determination of a number N of sufficient carriers (Po) so that the capacity of all the carriers of the sector enables handling of the total traffic (T).

10. Method as claimed in any one of Claims 1 to 9, wherein the frequency planning step (44) is preceded by a step (43) of calculating interference constraints between carriers (Po) including the calculation of a compatibility matrix between all the carriers (Po) of all the cells.

11. Method as claimed in any one of Claims 2 to 10, wherein the step (45) of power adjustment of each of the carriers (Po) comprises for all the sectors (Sc) a first step (46) of estimating the convergence between a first criterion corresponding to obtaining of a maximum value for the sum of the traffic handling capacities of the carriers (Po) of the sectors (Sc), and a second criterion corresponding to obtaining a minimum dispersion of the traffic handling capacities individually provided by the different carriers (Po) of each sector (Sc).

12. Method as claimed in Claim 11, wherein the said step (45) of power adjustment is followed by a step (47) of calculating new frequency constraints resulting from the power adjustment, a second estimation step (48) then being performed for estimating the convergence between the said first and second criteria.

13. Method as claimed in Claim 12, comprising a third step (50) of estimating the convergence between the said first and second criteria, performed just after a step (49) of new calculation of the service areas (2) of each carrier (Po), the said new calculation step (49) taking account in particular of the changes resulting from the power adjustment.

14. Method as claimed in any one of Claims 11 to 33, wherein each convergence estimation step (46, 48, 50) comprises at least one calculation of the said convergence function (TEMP) of the type corresponding to a difference between a first value representing the first criterion and a value representing the second criterion, then a comparison of the variation in this difference with an acceptance threshold which is not to be exceeded so that the convergence is acceptable.

15. Method as claimed in Claim 14, wherein a reiteration (R1) of the sharing of the transmitter power between the carriers of one and the same sector (Sc) is triggered in the event of the acceptance threshold being exceeded during the first estimation step (46) of convergence between the said first and second criteria.

16. Method as claimed in either Claim 14 or Claim 15, wherein a reiteration (R2) of the steps (43, 44) for calculating interference constraints between carriers (Po) and for planning frequencies is triggered in the event of the acceptance threshold being exceeded during the second step (48) of estimation of the convergence between the said first and second criteria.

17. Method as claimed in any one of Claims 14 to 16, wherein a reiteration (R3) of the step (42) of assigning carriers to service areas (2) is triggered in the event of the acceptance threshold being exceeded during the third step (50) of estimating the convergence between the said first and second criteria.

18. Computer system (1) for implementing the method as claimed in any one of Claims 1 to 17, comprising a computing module (10) and storage means (11) to store data (d1) representing geographical areas divided into a plurality of dots or pixels (301, 302, 303) depending upon the division of the said network, data (d2) characteristic of the sectors (Sc) and transmitters (E) of the network, data (d3) representing the transmit/receive radio attenuation for each sector (Sc), data (d4) representing the distribution and volume of the traffic in the network, **characterised in that** it comprises selection means (12) for selecting each transmission sector (Sc) associated with a transmitter (E), the computing module (10) comprising association means for:

   - associating carriers (Po1, Po2, PoN-1, PoN) of the transmitter (E) with service areas (2), using the data (d1, d2, d3, d4) stored in the storage means (11) to divide the total traffic (T) to be handled in the sector (Sc) into N shares of traffic (T/N) in N complementary service areas (2) determined as a function of their radio attenuation;
   - associating a determined frequency (f1, f2, f3) with each service area (21, 22, 23) such that the different carriers (Po) used in one sector (Sc) are respectively associated with a single service area of the said sector (Sc);
   - the said computer system (1) comprising means (13) for adjusting the transmission power of each of the carriers (Po) as a function of the determination by the computing module (10) of sharing of the power of the transmitter (E) between the carriers of one and the same sector (Sc).

19. System as claimed in Claim 18, wherein the computing module (10) produces a sharing of the power of transmitter (E) between the carriers (Po) of one and the same sector (Sc) using an optimisation program adapted in order to obtain, according to a first criterion, a maximum value for the sum of the traffic handling capacities of the carriers (Po) of all the sectors (Sc) and to obtain, according to a second criterion, a minimum dispersion of the traffic handling capacities individually provided by the different carriers (Po) of the sector (Sc), estimation parameters (d5) stored in the storage means (11) being used by the computing module (10) to allow optimised sharing of the power of the transmitter (E) between the carriers (Po).

20. System as claimed in either Claim 18 or Claim 19, wherein the association means are arranged in order to take account of attenuation thresholds (S1, S2) to determine the service areas (2) of a sector (Sc), the association means grouping together the pixels in which the attenuation of the transmit/receive radio signal propagation is lower than a first determined threshold (S1) in a first service area (21), and in at least one second service area (22, 23) the pixels in which the attenuation of the transmit/receive radio signal propagation is between the said first threshold (S1) and a predetermined maximum attenuation (Max).

21. System as claimed in any one of Claims 18 to 20, comprising in a second memory (14) data representing the data traffic in the network for at least one determined time slot, the system also comprising:

   - interactive means (3) between the user and the said system (1) connected to the selection means (12) for selecting and displaying at least one of the said geographical areas,

- means for superimposition on the said selected geographical area of data representing traffic at a determined time slot in order to form at least one traffic distribution map (30) displayed by the said interactive means (3),
- means (15) for extraction and tabling, based on data provided by counting means (4) and extracted from at least one operating and maintenance centre (OMC), series of measurements as a function of geographical areas and time slots.

**Patentansprüche**

1. Verfahren zur Leistungsplanung in einem zellulären Funknetzwerk (N), welches das Merkmal aufweist, dass die Wiederverwendung einer selben Frequenz auf allen Zellen des Netzwerks erlaubt ist (zum Beispiel Zugriff des CDMA-Typs), das mit terrestrischen Funk-Basistationen (BTS, engl. Base Transceiver Station [Basis-Sende-Empfangs-Station]) ausgestattet ist, die Sender (E) zum Übertragen von Daten in bestimmten Sendesektoren (Sc) und zum Sicherstellen einer Funkabdeckung in Zonen, die jeweilige Zellen definieren, aufweisen, wobei das Verfahren mittels eines Computersystems (1) umgesetzt wird, das mit Speichermitteln (11) ausgestattet ist, die speichern: Daten (d1), die für geographischen Zonen repräsentativ sind, die in eine Mehrzahl von Punkten oder Pixeln (301, 302, 303) gemäß der Aufteilung des Netzwerkes aufgeteilt sind, Daten (d2), die für die Sektoren (Sc) und die Sender (E) des Netzwerks kennzeichnend sind, Daten (d3), die für die Funkdämpfung beim Senden/Empfangen für jeden Sektor (Sc) repräsentativ sind, Daten (d4), die für die Verteilung und das Volumen des Verkehrs in dem Netzwerk repräsentativ sind, wobei das Verfahren **dadurch gekennzeichnet ist, dass** ein Rechenmodul (10) des Computersystems (1) für jeden Sendesektor (Sc), der mit einem Sender (E) verknüpft ist, der eine Mehrzahl von Trägern (Po1, Po2, PoN-2, PoN) aufweist, einen Schritt (42) zur Zuordnung der Träger zu Versorgungsbereichen (2) realisiert, wobei das Rechenmodul (10) die in den Speichermitteln (11) gespeicherten Daten (d1, d2, d3, d4) zum Verteilen des gesamten abzuwickelnden Verkehrs (T) des Sektors (Sc) in N Teile von Verkehr (T/N) in N komplementären Versorgungsbereichen (2) verwendet, die in Abhängigkeit von ihrer Funkdämpfung bestimmt werden und geographisch Ringe mit einer im Verhältnis zu dem Sender (E) größer werdenden Entfernung bilden, wobei das Verfahren ferner aufweist:

   - einen Frequenzplanungs-Schritt (44), der die Zuordnung einer bestimmten Frequenz (f1, f2, f3) zu jedem Versorgungsbereich (21, 22, 23) aufweist, so dass die verschiedenen Träger (Po), die in einem Sektor (Sc) verwendet werden, jeweils mit einem einzigen Versorgungsbereich des Sektors (Sc) verknüpft werden;
   - einen Schritt (45) zur Anpassung der Leistungen von jedem der Träger, der die Bestimmung durch das Rechenmodul (10) für jeden Versorgungsbereich (2) von Signal-Rausch-Verhältnissen in jedem Pixel und von einer Verkehrsabwicklungs-Kapazität durch den Träger (Po), der mit diesem Versorgungsbereich (2) verknüpft ist, mit einschließt, wobei ein Aufteilen der Leistung des Senders zwischen den Trägern eines gleichen Sektors (Sc) auf eine durch das Rechenmodul (10) bestimmte Weise realisiert wird, so dass der Schritt (45) zur Anpassung der Leistungen dem Erhalt eines Maximums der Summe der Verkehrsabwicklungs-Kapazitäten der Träger (Po) für jeden Sektor (Sc) entspricht, wobei sich das Maximum insbesondere aus mindestens einem Vergleich durch das Rechenmodul (10) zwischen mehreren unterschiedlichen Leistungs-Teilungs-Lösungen zwischen den Trägern (Po) ergibt.

2. Verfahren gemäß Anspruch 1, wobei das Aufteilen der Leistung des Senders (E) zwischen den Trägern (Po) eines gleichen Sektors (Sc) auf eine Weise realisiert wird, die von dem Rechenmodul (10) bestimmt wird, so dass der Schritt (45) zur Anpassung der Leistungen dem Erhalten eines Minimums an Streuung der durch die verschiedenen Träger (Po) des Sektors (Sc) einzeln mitgebrachten Verkehrsabwicklungs-Kapazitäten entspricht.

3. Verfahren gemäß Anspruch 1 oder 2, wobei die Versorgungsbereiche (2) in einem Sektor (Sc) in Abhängigkeit von Dämpfungsschwellen (S1, S2) bestimmt werden, wobei ein erster Versorgungsbereich (21) die Pixel zusammenfasst, die eine Ausbreitungsdämpfung des Funksignals beim Senden/Empfangen aufweisen, die kleiner als eine erste bestimmte Schwelle (S1) ist, während mindestens ein zweiter Versorgungsbereich (22, 23) die Pixel zusammenfasst, die eine Ausbreitungsdämpfung des Funksignals beim Senden/Empfangen aufweisen, die zwischen der ersten Schwelle (S1) und einem vorbestimmten Dämpfungs-Maximum (Max) liegt.

4. Verfahren gemäß einem der Ansprüche 1 bis 3, das einen Schritt (40) zur Initialisierung der folgenden Konfigurationsparameter aufweist:

   - eine Liste (d21) der Sektoren (Sc) und ihre verfügbaren Leistungsmerkmale;
   - Dämpfungs-Ausbreitungs-Matrizen (d30) für jeden Sektor;

- eine Matrix für die Verkehrsverteilung (d41);
- einen für ein Verkehrsvolumen repräsentativen Nutzungskoeffizienten (d42);
- Spezifikationen (d22) der Anzahl von Trägern pro Sektor;
- Übereinstimmungsregeln (d23) zum Verknüpfen der Träger mit Sende-Verstärkern;
- Schätzungsparameter (d5), die vorgesehen sind für die Verwendung in mindestens einer Konvergenz-Funktion (TEMP), die dazu dient, zu verifizieren, dass die Anpassung der Leistungen insbesondere dem Erhalten eines Maximums der Summe der Verkehrsabwicklungs-Kapazitäten der Träger (Po) der Gesamtheit der Sektoren (Sc) dient.

5. Verfahren gemäß einem der Ansprüche 1 bis 4, wobei die für die Verteilung und das Verkehrsvolumen im Netz repräsentativen Daten (d4) Verkehrsverteilungs-Karten aufweisen, die mittels des Computersystems (1) realisiert werden, durch die Verwendung der für geographische Zonen repräsentativen Daten und von Daten, die für den Verkehr im Netzwerk der Teilnehmer dieses Netzwerks repräsentativ sind, einschließlich quantitativer und qualitativer Messungen des Verkehrs der Teilnehmer in dem Netzwerk, wobei die Messungen mindestens einem bestimmten Zeitabschnitt entsprechen, wobei mindestens eine Karte (30) für die Netzwerk-Verkehrsverteilung nach einer Auswahl von mindestens einer geographischen Zone mittels interaktiver Mittel (3) zwischen dem Benutzer und dem Computersystem (2) und einer Wiedergewinnung durch das System (1) von Daten, die für den Verkehr repräsentativ sind, die der ausgewählten geographischen Zone und einem bestimmten Zeitabschnitt entsprechen, wn durch Nutzung dieser Daten durch das Computersystem (1) Daten zu bilden, die für Abdeckungszellen repräsentativ sind, die mit jedem Sender verknüpft sind.

6. Verfahren gemäß Anspruch 5, wobei die Daten, die für den Verkehr in dem Funknetzwerk (N) repräsentativ sind, Daten aufweisen, die von Zählmitteln (4) bereitgestellt werden und mittels Extraktions- und Tabellierungsmitteln (15) des Computersystems (1) aus mindestens einem Geräte-Überwachungszentrum (OMC) extrahiert werden.

7. Verfahren gemäß Anspruch 5 oder 6, wobei dem Schritt (42) des Zuweisens der Träger zu Versorgungsbereichen (2) ein Schritt (41) des Berechnens der Verteilung des Verkehrs in einer Zone vorausgeht, die der Abdeckung des Netzwerks (N) entspricht, wobei der Schritt (41) des Berechnens der Verteilung des Verkehrs die Verkehrs-Verteilungs-Karten verwendet, um den Verkehr in jedem der Pixel zu schätzen, und mittels der Daten (d3), die für die Funk-Dämpfung beim Senden/Empfangen für jeden Sektor (Sc) repräsentativ sind, eine Dämpfung zwischen dem Sender und dem Empfänger in dem betrachteten Sektor (Sc) sowie eine Wahrscheinlichkeit der Zuweisung in dem Sektor in Abhängigkeit von dem empfangenen Feld und dem Empfangspegel der benachbarten Sektoren berücksichtigt.

8. Verfahren gemäß Anspruch 7, wobei der Schritt (41) des Berechnens der Verteilung des Verkehrs das Berechnen einer kumulativen Verteilungsfunktion des abzuwickelnden Verkehrs in Abhängigkeit von der Höhe der Dämpfung der Ausbreitung in jedem betrachteten Sektor (Sc) aufweist.

9. Verfahren gemäß einem der Ansprüche 1 bis 8, wobei der Schritt (42) des Zuweisens der Träger zu Versorgungsbereichen (2) für mindestens einen der Sektoren (Sc) die Berechnung eines gesamten abzuwickelnden Verkehrs (T) und die Bestimmung einer Anzahl N von Trägern (Po) aufweist, die ausreichen, damit die Kapazität der Gesamtheit der Träger des Sektors das Abwickeln gesamten Verkehrs (T) erlaubt.

10. Verfahren gemäß einem der Ansprüche 1 bis 9, wobei dem Schritt (44) der Frequenzplanung ein Schritt (43) der Berechnung von Störungs-Belastungen zwischen Trägern (Po) vorausgeht, der die Berechnung einer Matrix für die Kompatibilität zwischen allen Trägern (Po) aller Zellen aufweist.

11. Verfahren gemäß einem der Ansprüche 2 bis 10, wobei der Schritt (45) der Anpassung der Leistungen von jedem der Träger (Po) für die Gesamtheit der Sektoren (Sc) einen ersten Schritt (46) des Schätzens der Konvergenz zwischen einem ersten Kriterium, das dem Erhalt eines Maximums der Summe der Verkehrsabwicklungs-Kapazitäten der Träger (Po) der Sektoren (Sc) entspricht, und einem zweiten Kriterium, das dem Erhalt eines Minimums an Streuung der durch die verschiedenen Träger (Po) von jedem Sektor (Sc) einzeln mitgebrachten Verkehrsabwicklungs-Kapazitäten entspricht, aufweist.

12. Verfahren gemäß Anspruch 11, wobei auf den Leistungs-Anpassungs-Schritt (45) ein Schritt (47) der Berechnung von neuen Frequenz-Belastungen folgt, die aus der Anpassung der Leistungen resultieren, wobei anschließend ein zweiter Schritt (48) des Schätzens der Konvergenz zwischen dem ersten und zweiten Kriterium realisiert wird.

**13.** Verfahren gemäß Anspruch 12, welches einen dritten Schritt (50) des Schätzens der Konvergenz zwischen dem ersten und dem zweiten Kriterium aufweist, der genau nach einem Schritt (49) eines neuen Berechnens von Versorgungsbereichen (2) von jedem Träger (Po) realisiert wird, wobei der Schritt (49) zur neuen Berechnung insbesondere die Änderungen berücksichtigt, die sich aus der Anpassung der Leistungen ergeben.

**14.** Verfahren gemäß einem der Ansprüche 11 bis 13, wobei jeder Konvergenz-Schätzungs-Schritt (46, 48, 50) mindestens eine Berechnung der Konvergenzfunktion (TEMP) der Art, die einer Differenz zwischen einem ersten für das erste Kriterium repräsentativen Wert und einem für das zweite Kriterium repräsentativen Wert entspricht, und anschließend einen Vergleich der Variation dieser Differenz mit einer nicht zu überschreitenden Akzeptanz-Schwelle aufweist, die nicht zu überschreiten ist, damit die Konvergenz akzeptabel ist.

**15.** Verfahren gemäß Anspruch 14, wobei eine Wiederholung (R1) des Aufteilens der Leistung des Senders zwischen den Trägern eines gleichen Sektors (Sc) im Fall einer Überschreitung der Akzeptanz-Schwelle beim Schritt (46) zur Schätzung der Konvergenz zwischen dem ersten und dem zweiten Kriterium ausgelöst wird.

**16.** Verfahren gemäß Anspruch 14 oder 15, wobei eine Wiederholung (R2) der Schritte (43, 44) zur Berechnung von Störungs-Belastungen zwischen Trägern (Po) und zur Frequenzplanung in dem Fall einer Überschreitung der Akzeptanzschwelle bei dem zweiten Schritt (48) zur Schätzung der Konvergenz zwischen dem ersten und dem zweiten Kriterium ausgelöst wird.

**17.** Verfahren gemäß einem der Ansprüche 14 bis 16, wobei eine Wiederholung (R3) des Schrittes (42) der Zuweisung der Träger zu Versorgungsbereichen (2) im Fall einer Überschreitung der Akzeptanzschwelle bei dem dritten Schritt (50) zur Schätzung der Konvergenz zwischen dem ersten und dem zweiten Kriterium ausgelöst wird.

**18.** Computersystem (1) zum Durchführen des Verfahrens gemäß einem der Ansprüche 1 bis 17, aufweisend ein Rechenmodul (10) und Speichermittel (11) zum Speichern von Daten (d1), die für geographische Zonen repräsentativ sind, die gemäß der Aufteilung des Netzwerkes in eine Mehrzahl von Punkten oder Pixeln (301, 302, 303) aufgeteilt sind, Daten (d2), die für die Sektoren (Sc) und die Sender (E) des Netzwerks kennzeichnend sind, Daten (d3), die für die Funkdämpfung beim Senden/Empfangen für jeden Sektor (Sc) repräsentativ sind, Daten (d4), die für die Verteilung und das Volumen des Verkehrs in dem Netzwerk repräsentativ sind, **dadurch gekennzeichnet, dass** es Auswahlmittel (12) zum Auswählen von jedem mit einem Sender (E) verknüpften Sendesektor (Sc) aufweist, wobei das Rechenmodul (10) Verknüpfungsmittel aufweist, zum:

- Verknüpfen der Träger (Po1, Po2, PoN-1, PoN) des Senders (E) mit Versorgungsbereichen (2) unter Verwendung der Daten (d1, d2, d3, d4), die in den Speichermitteln (11) gespeichert sind, zum Verteilen des gesamten abzuwickelnde Verkehrs (T) des Sektors (Sc) in N Teilen von Verkehr (T/N) in N komplementären Versorgungsbereichen (2), die in Abhängigkeit von ihrer Funkdämpfung bestimmt werden,
- Verknüpfen einer bestimmten Frequenz (f1, f2, f3) mit jedem Versorgungsbereich (21, 22, 23), so dass die verschiedenen Träger (Po), die in einem Sektor (Sc) verwendet werden, jeweils mit einem einzigen Versorgungsbereich des Sektors (Sc) verknüpft werden,

wobei das Computersystem (1) Mittel (13) zum Anpassen der Sendeleistung von jedem der Träger (Po) in Abhängigkeit von einer Bestimmung durch das Rechenmodul (10) einer Aufteilung der Leistung des Senders (E) zwischen den Trägern eines selben Sektors (Sc) aufweist.

**19.** System gemäß Anspruch 18, wobei das Rechenmodul (10) eine Aufteilung der Leistung des Senders (E) zwischen den Trägern (Po) eines selben Sektors (Sc) realisiert, unter Verwendung eines Optimierungsprogrammes, das angepasst ist zum Erhalten gemäß einem ersten Kriterium eines Maximums für die Summe der Verkehrsabwicklungs-Kapazitäten der Träger (Po) der Gesamtheit der Sektoren (Sc), und gemäß einem zweiten Kriterium eines Minimums an Streuung der durch die verschiedenen Träger (Po) des Sektors (Sc) einzeln mitgebrachten Verkehrsabwicklungs-Kapazitäten, wobei Schätzungsparameter (d5), die in den Speichermitteln (11) gespeichert sind, von dem Rechenmodul (10) verwendet werden, um eine Optimierung der Aufteilung der Leistung des Senders (E) zwischen den Trägern (Po) zu ermöglichen.

**20.** System gemäß Anspruch 18 oder 19, wobei die Verknüpfungsmittel so aufgebaut sind, dass Dämpfungsschwellen (S1, S2) zum Bestimmen der Versorgungsbereiche (2) eines Sektors (Sc) berücksichtigt werden, wobei die Verknüpfungsmittel die Pixel, die eine Ausbreitungsdämpfung des Funksignals beim Senden/Empfangen aufweisen, die kleiner als eine erste bestimmte Schwelle (S1) ist, in einem ersten Versorgungsbereich (21), und die Pixel, die eine Ausbreitungsdämpfung des Funksignals beim Senden/Empfangen aufweisen, die zwischen der ersten Schwelle (S1) und einem vorbestimmten Dämpfungs-Maximum (Max) liegt, in mindestens einem zweiten Versorgungsbereich (22, 23) zusammenfassen.

21. System gemäß einem der Ansprüche 18 bis 20, welches in einem zweiten Speicher (14) Daten aufweist, die für den Verkehr von Daten in dem Netzwerk in mindestens einem bestimmten Zeitabschnitt repräsentativ sind, wobei das System ferner aufweist:

- interaktive Mittel (3) zwischen dem Benutzer und dem System (1), die mit den Auswahlmitteln (12) zum Auswählen und Anzeigen von mindestens einer der geographischen Zonen verbunden sind,
- Mittel zum Übereinanderlegen in der ausgewählten geographischen Zone von Daten, die für den Verkehr in einem bestimmten Zeitabschnitt repräsentativ sind, um mindestens eine Karte für die Verteilung (30) des Verkehrs zu bilden, die durch die interaktiven Mittel (3) angezeigt wird,
- Mittel zum Extrahieren und Tabellieren (15) ausgehend von Daten, die von den Zählmitteln (4) bereitgestellt werden und aus mindestens einem Geräte-Überwachungszentrum (OMC) extrahiert werden, von Reihen von Messungen in Abhängigkeit von den geographischen Zonen und den Zeitabschnitten.

**Fig. 1**

**Fig. 2**

**Fig. 3**

**Fig. 4**

**FIG. 5**

**EP 1 722 585 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005011154 A
- EP 1335616 A
- EP 1283647 A
- US 200307805 B